# EUROPEAN PATENT SPECIFICATION

(11) **EP 2 738 834 B1**
(45) Date of publication and mention of the grant of the patent: **20.03.2019**
(21) Application number: 12819481.8
(22) Date of filing: 06.07.2012
(51) Int. Cl.: H01M 2/10, H01M 2/12

(54) **BATTERY PACK**
BATTERIEPACK
BLOC-BATTERIE

(30) Priority: 29.07.2011 JP 2011166833
(43) Date of publication of application: 04.06.2014
(73) Proprietor: Panasonic Intellectual Property Management Co., Ltd., Osaka-shi, Osaka 540-6207 (JP)
(72) Inventor: GESHI, Shinya, Osaka 540-6207 (JP); MOTOKAWA, Shinya, Osaka 540-6207 (JP); KISHII, Daisuke, Osaka 540-6207 (JP); NAGAYAMA, Masatoshi, Osaka 540-6207 (JP); OHSAWA, Yoshiki, Osaka 540-6207 (JP)
(74) Representative: Grünecker Patent- und Rechtsanwälte PartG mbB
(86) International application number: PCT/JP2012/004415
(87) International publication number: WO 2013/018283

(56) References cited:
- EP-A1- 2 654 100
- JP-A- 2009 277 647
- JP-A- 2010 173 536
- JP-A- 2011 065 906
- US-A1- 2009 233 169
- US-A1- 2009 274 952
- US-A1- 2009 286 138
- US-A1- 2011 027 632

## Description

### TECHNICAL FIELD

The present invention relates to battery packs in which a plurality of battery modules are arranged.

### BACKGROUND ART

Reusable secondary batteries have been used as power sources of portable electronic devices, mobile telecommunication devices, etc., to save resources and energy. Use of such secondary batteries as power sources of vehicles, storage of electricity, etc. has been considered to reduce an amount of fossil fuel used, an amount of CO₂ emission, etc.

Specifically, it has been considered to electrically connect secondary batteries (cells) to each other, thereby forming a battery module, and use the battery module as a power source. For example, a battery module disclosed in Patent Documents 1-4 has a structure in which an exhaust path is apart from a battery chamber. Thus, even if a high-temperature gas is released from a cell, normal cells can be prevented from being exposed to the high-temperature gas.

US 2009/286138 A1 relates to a film-covered electrical device packaging system including a frame member which holds the film covered battery by an outer periphery portion of the film covered battery and which has a portion thicker than the thickness of power generation element, and in which the waste gas channel is formed in a position corresponding to the gas discharger, and first pressure plate which sandwiches the frame member, in which the penetrating portion is formed in a position corresponding to the waste gas channel, and in which the gas guide groove communicating from through holes to the sidewall face is formed.

### CITATION LIST

### PATENT DOCUMENT

PATENT DOCUMENT 1: Japanese Unexamined Patent Publication No.2002-151025
PATENT DOCUMENT 2: Japanese Unexamined Patent Publication No.2006-244981
PATENT DOCUMENT 3: Japanese Unexamined Patent Publication No.2009-4193
PATENT DOCUMENT 4: Japanese Unexamined Patent Publication No.2010-140695

### SUMMARY OF THE INVENTION

### TECHNICAL PROBLEM

There is a case in which battery modules, such as those described above, are electrically connected to each other to form a battery pack. In this case, if outlet openings of exhaust paths of the respective battery modules are connected to each other using an external connecting pipe, it may result in a reduction in energy density of the battery pack because the battery pack has to have an additional space for the connecting pipe.

The present invention was made in view of the above problem, and it is an objective of the invention to provide a battery pack superior in safety without a reduction in energy density

### SOLUTION TO THE PROBLEM

A battery pack according to the present invention is defined in claim 1.

In the battery module, cells may be arranged in a single row, or may be two-dimensionally arranged. If the cells are two-dimensionally arranged, the "arrangement direction of the cells" includes two directions. If the number of rows of the cells in one direction is larger than the number of rows of the cells in the other direction, the "arrangement direction of the cells" is one of the two directions along which the larger number of rows of the cells are arranged. If the number of rows of the cells in one direction is the same as the number of rows of the cells in the other direction, the "arrangement direction of the cells" may be either one of the two directions.

### ADVANTAGES OF THE INVENTION

According to the present invention, it is possible to provide a battery pack superior in safety without a reduction in energy density.

### BRIEF DESCRIPTION OF THE DRAWINGS

FIG. 1 is a vertical cross section of a cell according to an embodiment of the present invention.
FIG. 2 is a plan view which illustrates an internal structure of a battery module according to an embodiment of the present invention.
FIG. 3 is an exploded perspective view of a battery pack according to an embodiment of the present invention.
FIG. 4 is a cross section taken along the line IV-IV of FIG. 3.
FIG. 5 is a cross section of a battery pack according to another embodiment of the present invention.
FIG. 6(a) is an exploded plan view of part of a battery pack according to another embodiment of the present invention. FIG. 6(b) is a cross section taken along the line VIB-VIB of FIG. 6(a).
FIG. 7 is an exploded plan view of part of a battery pack according to another embodiment of the present invention.
FIG. 8 is a cross section of a battery pack according to another embodiment of the present invention.
FIG. 9(a) is a plan view of a battery pack according to another embodiment of the present invention, and FIG. 9(b) is a cross section of the battery pack.
FIG. 10 is a perspective view illustrating a battery pack according to another embodiment of the present invention.
FIG. 11 is a perspective view illustrating the back side of the battery pack of FIG. 10.

### DESCRIPTION OF EMBODIMENTS

Embodiments of the present invention will be described in detail below based on the drawings. The present invention is not limited to the embodiments described below.

A battery pack of an embodiment of the present invention includes a plurality of battery modules in an arrangement. Each of the battery modules includes a plurality of cells in an arrangement. The structures of the cells, the battery modules, and the battery pack will be sequentially described in the following description.

### <Cell>

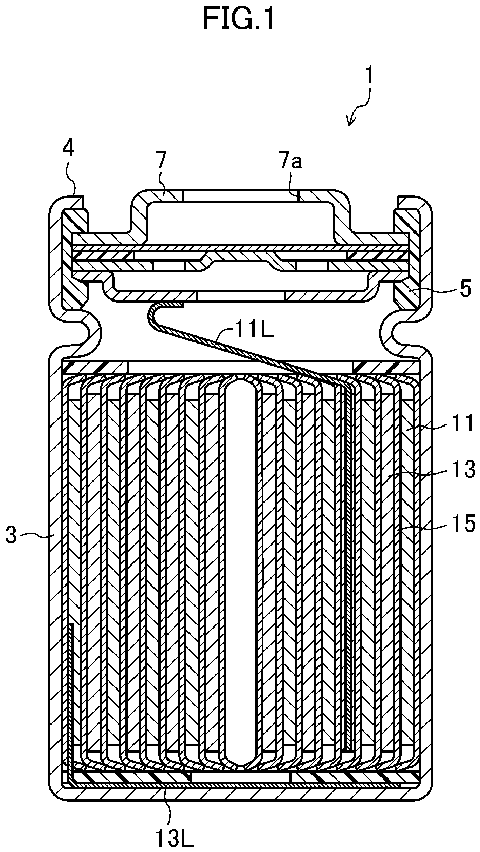

FIG. 1 is a vertical cross section of a cell according to the present embodiment.

A cell 1 according to the present embodiment is, for example, a lithium ion secondary battery, and as shown in FIG. 1, an opening of a battery case 3 is sealed with a sealing plate 7 via a gasket 5. An electrode group is accommodated in the battery case 3 together with a nonaqueous electrolyte. The electrode group is formed by winding a positive electrode plate 11 and a negative electrode plate 13 with a separator 15 interposed between the positive electrode plate 11 and the negative electrode plate 13. The positive electrode plate 11 is connected to the sealing plate 7 via a positive electrode lead 11L. The negative electrode plate 13 is connected to the battery case 3 via a negative electrode lead 13L.

A release portion 7a is formed in the sealing plate 7. The release portion 7a is an opening through which a high-temperature gas is released to the outside of the battery case 3 when a cell is in an abnormal state.

### <Battery Modulo

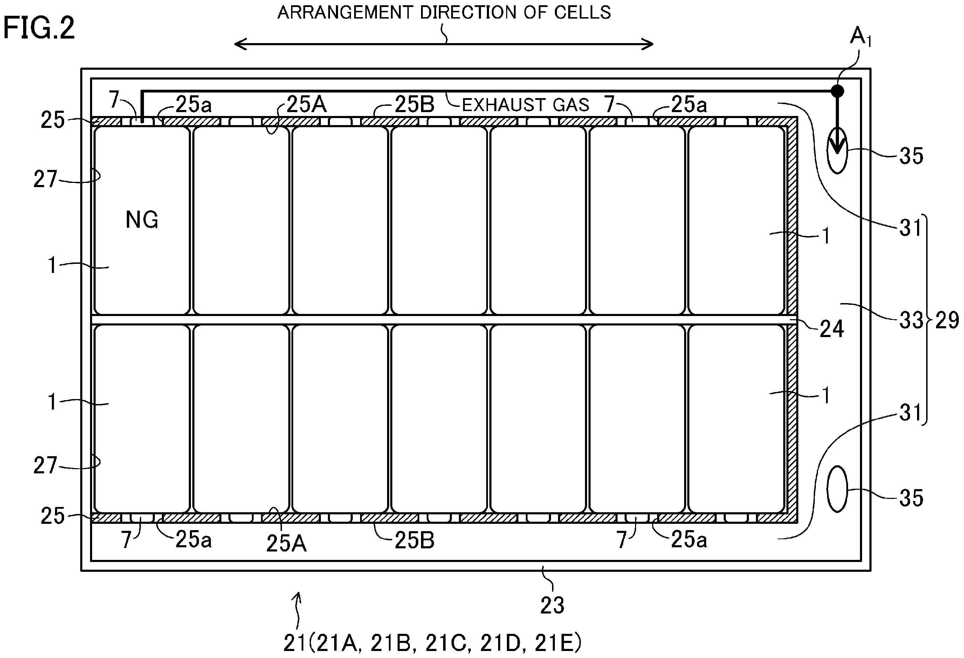

FIG. 2 is a plan view of an internal structure of a battery module 21 according to the present embodiment.

As shown in FIG. 2, the battery module 21 of the present embodiment includes a plurality of cells 1 arranged in a rectangular iron module case 23. The module case 23 is separated into two battery chambers 27, 27 and an exhaust path 29 by partition plates 25, 25 each having an L shape in plan view. The two battery chambers 27, 27 are partitioned with a separation plate 24. The exhaust path 29 surrounds three sides of the battery chambers 27, 27 partitioned with the separation plate 24.

Each of the battery chambers 27 are formed by an inner surface 25A of the partition plate 25, the separation plate 24, and an inner surface of the module case 23. Each of the battery chambers 27 accommodates the cells 1. The sealing plate 7 of each of the cells 1 is positioned to face the partition plate 25 (i.e., at the side of the exhaust path 29, and at the opposite side of the separation plate 24). Thus, bottom surfaces (i.e., opposite side of the release portion 7a) of the battery cases 3 of the cells 1 accommodated in one battery chamber 27 are opposed to the bottom surfaces of the battery cases 3 of the cells 1 accommodated in the other battery chamber 27. Part of each of the partition plates 25 which extends along the arrangement direction of the cells is provided with a plurality of through holes 25a at intervals. The sealing plate 7 of the cell 1 is exposed through each of the through holes 25a formed in the partition plate 25. Thus, the release portion 7a of the cell 1 communicates with the exhaust path 29. Further, the peripheral edge of each of the through holes 25a formed in the partition plate 25 is in contact with a shoulder 4 of the cell 1 (see FIG. 1). Thus, the gas (hereinafter also referred to as "exhaust gas" or "high-temperature gas") released from any of the cells 1 can be prevented from flowing back to, or flowing into the battery chamber 27. Accordingly, normal cells 1 can be prevented from being exposed to the high-temperature gas, and it is possible to provide a battery module 21 superior in safety.

The exhaust path 29 is a space formed by outer surfaces 25B, 25B of the partition plates 25, 25 and the inner surface of the module case 23, and includes first exhaust path branches 31 and a second exhaust path branch 33. The first exhaust path branches 31 extend in the arrangement direction of the cells. The second exhaust path branch 33 communicates with the first exhaust path branches 31, and extends in a direction perpendicular to the arrangement direction of the cells, that is, in an axial direction of the cells 1.

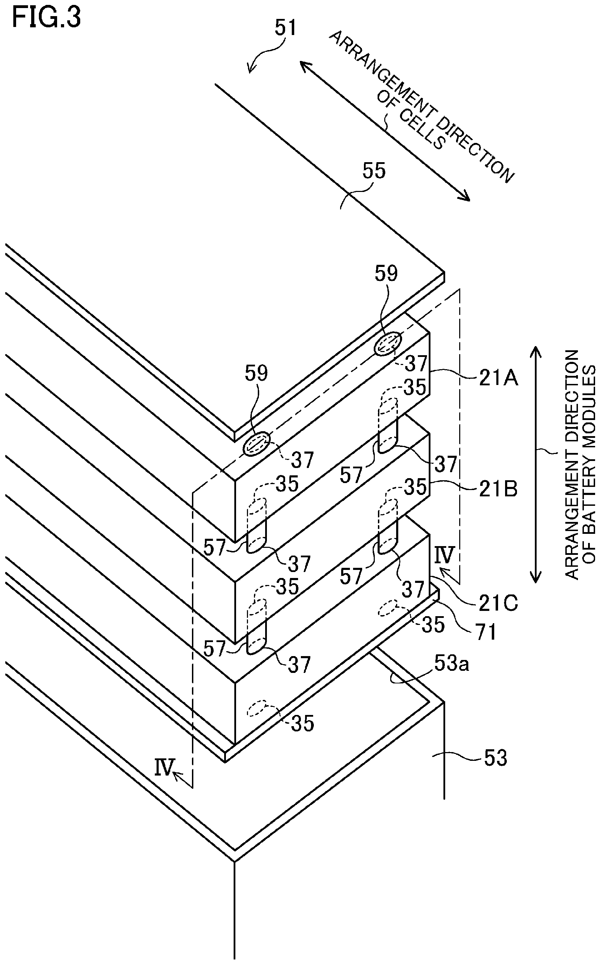

A first outlet opening (an outlet opening) 35 and a first inlet opening (an inlet opening shown in FIG. 3) 37 are provided to the second exhaust path branch 33 at each longitudinal end of the second exhaust path branch 33. The first outlet opening 35 is an opening through which the exhaust gas is released to the outside of the module case 23. The first outlet opening 35 is formed in a lower surface of the module case 23, and is open in a direction perpendicular to the arrangement direction of the cells. The first inlet opening 37 is an opening to which the gas released from the first outlet opening 35 of an adjacent battery module 21 in a battery pack 51 is introduced. The first inlet opening 37 is formed in an upper surface of the module case 23 (i.e., the side surface of the module case opposite to the side surface of the module case in which the outlet opening is formed).

### <Battery Pack>

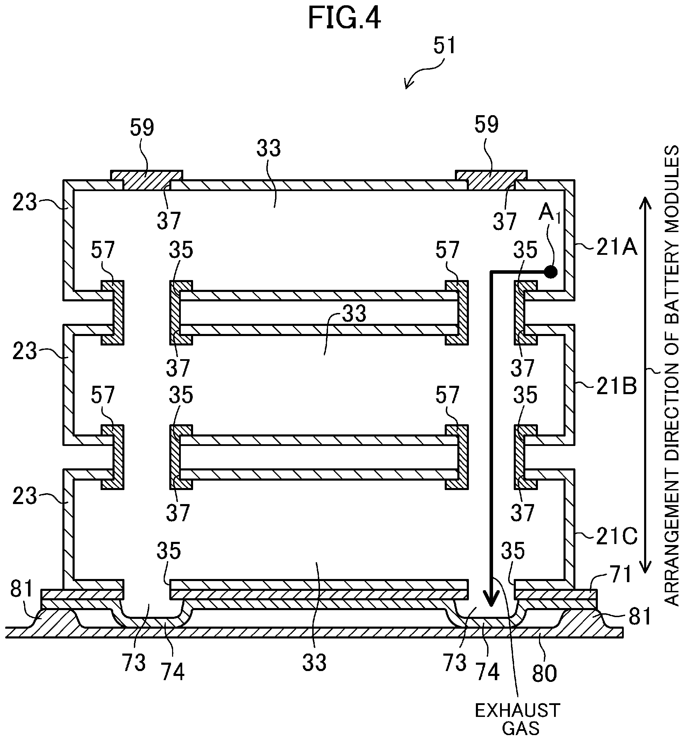

FIG. 3 is an exploded perspective view of the battery pack 51 according to the present embodiment. FIG. 4 is a cross section taken along the line IV-IV of the FIG. 3. A bottom surface portion 80 of a pack case is also illustrated in FIG. 4.

The battery pack 51 of the present embodiment includes, as shown in FIG. 3, a plurality of battery modules 21 and a pack case which includes an iron holding member 53 and an iron lid 55. The plurality of battery modules 21 are stacked together such that the lowermost module 21C is mounted on a module mounting member 71, and in this state, the battery modules 21 are accommodated in a hollow 53a of the holding member 53. The lid 55 is placed on the uppermost battery module 21A to close the opening of the hollow 53a. The module mounting member 71 is supported by raised portions 81 provided to the bottom surface portion 80 of the pack case, and at the raised portions 81, the module mounting member 71 is fixed to the pack case. Exhaust ducts 73 are provided to a lower surface of the module mounting member 71. The exhaust ducts 73 are in a space formed between the lower surface of the module mounting member 71 and the bottom surface portion 80 of the pack case by the raised portions 81.

The plurality of battery modules 21 are arranged in a direction to which the first outlet opening 35 and the first inlet opening 37 are open. The battery modules 21 are stacked such that the first outlet opening 35 of each of the battery modules 21 is located under the first inlet opening 37 as shown in FIG. 3 (i.e., located downstream of the exhaust gas). Thus, the first outlet opening 35 of the uppermost battery module 21A faces the first inlet opening 37 of the middle battery module 21B, and the first outlet opening 35 of the middle battery module 21B faces the first inlet opening 37 of the lowermost battery module 21C, in the arrangement direction of the battery modules. The first outlet opening 35 of the lowermost battery module 21C is in communication with the exhaust duct 73 provided to the module mounting member 71.

The exhaust paths 29 of the battery modules 21 communicate with each other in the arrangement direction of the battery modules, and form part of an exhaust path of the battery pack 51. Specifically, as shown in FIG. 3 and FIG. 4, the first outlet openings 35 of the uppermost battery module 21A are connected to the respective first inlet openings 37 of the middle battery module 21B through connecting members 57, and the first outlet openings 35 of the middle battery module 21B are connected to the respective first inlet openings 37 of the lowermost battery module 21C through connecting members 57. Each of the connecting members 57 is a pipe made, for example, of polybutylene terephthalate (PBT), and is fixed to circumferential edges of the corresponding first outlet opening 35 and the first inlet opening 37.

When a cell 1 is in an abnormal state (for example, when an internal short-circuit or an external short-circuit occurs in a cell 1), a high-temperature gas may be released from the cell 1 through the release portion 7a of the sealing plate 7. For example, suppose that a high-temperature gas is released from a cell 1 in the uppermost battery module 21A (the cell 1 labeled NG in FIG. 2). As shown in FIG. 2, the released gas is released from the release portion 7a (see FIG. 1) into the first exhaust path branch 31 of the exhaust path 29, and flows along the longitudinal direction of the first exhaust path branch 31 to collide with the inner surface of the module case 23 (near point A₁). The flowing direction of the exhaust gas is changed by the collision with the inner surface of the module case 23, and the exhaust gas flows in a longitudinal direction of the second exhaust path branch 33 to be released from the first outlet opening 35. Here, the exhaust gas is considered to be released from one of the first outlet openings 35 which the gas encounters first (the upper one of the first outlet openings 35 in FIG. 2), but part of the exhaust gas may be released from the other first outlet opening 35 which the gas encounters later (the lower one of the first outlet openings 35 in FIG. 2).

The gas released from the first outlet opening 35 of the uppermost battery module 21A flows through the connecting member 57 and is introduced to the first inlet opening 37 of the middle battery module 21B to be released from the first outlet opening 35 of the middle battery module 21B, as shown in FIG. 4. Thereafter, the gas is introduced to the first inlet opening 37 of the lowermost battery module 21C through the connecting member 57, released from the first outlet opening 35 of the battery module 21C to the exhaust duct 73 to sufficiently reduce the temperature of the gas, and then released within the pack case or released to the outside of the battery pack 51 from the outlet opening formed in the pack case.

The exhaust duct 73 of the module mounting member 71 is in pressure contact with the bottom surface portion 80 of the pack case. That is, a duct lower member 74 forming the exhaust duct 73 is brought into contact with the bottom surface portion 80 of the pack case by application of pressure. With this configuration, when the exhaust gas passes through the exhaust duct 73, the exhaust duct 73 is cooled due to thermal conduction to the bottom surface portion 80 of the pack case, which can rapidly reduce the temperature of the exhaust gas.

A space only for the exhaust duct 73 is not formed separately but the exhaust duct 73 is provided to the module mounting member 71 which is a member mediating fixation of the mounted battery modules 21, 21, 21 to the pack case. Thus, it is possible to increase the energy density per unit area of the battery pack. Since the exhaust duct 73 is further cooled by the pack case, the volume of the exhaust duct 73 can be reduced compared to the case where cooling is not provided by the pack case. This also increases the energy density. Since the raised portions 81 bear the load of the battery modules 21, it is possible to prevent the exhaust duct 73 from being broken even when an impact is exerted.

The module mounting member 71 requires a high strength as a plane so that a large number of battery modules 21 are mounted on the module mounting member 71. Since the exhaust duct 73 also serves as a strength reinforcing member, it is no longer necessary to provide a reinforcing member additionally. Disposing the duct lower member 74 at the bottom surface portion 80 of the pack case lowers the center of gravity of the battery modules and the module mounting member, thereby reducing the vibration load carried by positions at which the pack and the module mounting member are fixed.

As shown in FIG. 4, it is preferable to close the first inlet openings 37 of the uppermost battery module 21A with caps 59. As a result, most of the exhaust gas can be released along the direction indicated by the arrow in FIG. 4. This means that it is possible to control the flow path of the exhaust gas. Further, it is possible to prevent foreign substances from entering in the uppermost battery module 21A. The material for the caps 59 is not specifically limited, but is preferably PBT, etc.

As described above, in the present embodiment, it is possible to prevent a reduction in energy density due to the provision of the exhaust path to the battery pack 51. For example, as described in TECHNICAL PROBLEM, it is also possible to provide an exhaust path to a battery pack by connecting the outlet openings of the exhaust paths with a connecting pipe, etc. In this case, however, the connecting pipe, etc. is located outside the module case in plan view. Thus, a dead space in the battery pack (the space where no cell 1 is provided) is increased, which results in a reduction in energy density.

Another example may be that a release path member for a battery pack is separately formed, and an outlet opening of a battery module may be connected to the release path member. In this case, however, it is difficult to connect the outlet opening to the release path member for the battery pack if variations in the position of the outlet opening in the battery module occur. Thus, productivity of the battery pack may be decreased.

On the other hand, in the battery pack 51 according to the present embodiment, the exhaust duct 73 is provided to the module mounting member 71, so that it is possible to prevent a reduction in energy density. A long cooling path is required to cool the gas, but according to the configuration of the present embodiment, the exhaust path of the battery module is connected to the exhaust duct in contact with the pack case, and the gas passing through the exhaust duct is efficiently cooled by thermal conduction from the duct lower member 74 to the pack case. Therefore, a large space for the exhaust duct is not necessary, and thus it is possible to inhibit a reduction in energy density. The shape of the exhaust duct is not particularly limited. The exhaust duct may extend straight, may have a shape which winds the flow of the gas, or may be formed such that the gas passes through the exhaust duct in a curved manner.

Moreover, the plurality of battery modules 21 are arranged in a direction to which the first outlet opening 35 is open, and the first outlet opening 35 is in communication with the first inlet opening 37 of the adjacent battery module 21 through the connecting member 57. This means that the connecting member 57 is located inside the module case 23 in plan view. Thus, in the present embodiment, the length of the battery pack 51 in the arrangement direction of the battery modules is increased only by the length of the connecting member 57. As a result, it is possible to prevent a reduction in energy density due to the provision of the exhaust path to the battery pack. The length of the connecting member 57 connecting adjacent battery modules 21, 21 is 10 mm or less, that is, 4 mm, for example.

Further, a refrigerant can be made to flow in a space between the battery modules 21, 21 which is formed as a result of the provision of the connecting member 57, thereby making it possible to cool the battery modules 21. The space can be effectively used. In this case, it is preferable to provide a spacer between the adjacent battery modules 21, 21 to ensure the space for the flowing refrigerant, and ensure stable positioning of the battery module 21 to a predetermined location.

Further, in the battery pack 51 of the present embodiment, the connecting member 57 does not extend from the upstream side to the downstream side of the exhaust gas, but connect the first outlet opening 35 of one battery module 21 to the first inlet opening 37 of another battery module 21 adjacent to the one battery module 21. Thus, the battery pack 51 can be formed even if variations in the position of the first outlet opening 35 or the first inlet opening 37 in the module case 23 occur.

In the battery pack 51 of the present embodiment, the exhaust gas is released along the arrangement direction of the battery modules. Thus, cooling is provided by utilizing the height in which the battery modules 21 are arranged. The longer the length of the exhaust path of the battery pack 51, the lower the temperature of the gas released from the battery pack 51.

Further, in each of the battery modules 21 of the present embodiment, the first outlet opening 35 is open in a direction perpendicular to the arrangement direction of the cells. Thus, in an abnormal battery module 21, the high-temperature gas collides with the inner surface of the module case 23 more than once, and is then released from the first outlet opening 35. The inventors of the present application have checked that the greater the frequency of collision of the exhaust gas with the inner side surface of the module case 23 or the inner side surface of the pack case, the lower temperature gas is released from the battery pack. Thus, in the present embodiment, the entire length of the exhaust path 29 (i.e., a total length of the lengths of the first exhaust path branches 31 and the length of the second exhaust path branch 33) does not have to be that long in order to reduce the temperature of the gas released from the battery module 21. Accordingly, it is possible to reduce the temperature of the gas released from the battery module 21 without a reduction in energy density of the battery module 21.

That is, in the present embodiment, if the temperature of the gas released from a cell 1 is 1000°C or more, the gas is further cooled while passing through the exhaust duct 73. Accordingly, the temperature of the gas released from the battery pack 51 is about 100°C. Thus, it is possible to prevent a severe reaction between the gas released from the battery pack 51 and oxygen in the air.

Moreover, since each of the module cases 23, the module mounting member 71, and the pack case are made of a material having a high thermal conductivity, for example, iron, the exhaust gas can be efficiently cooled.

Further, in the battery pack 51 of the present embodiment, the exhaust path can be collected at one side (at the right end side in FIG. 3). Thus, the exhaust path and an electric system, such as a signal line, can be separated from each other by placing the electric system opposite to the exhaust path. As a result, the electric system can be prevented from being exposed to the high-temperature gas.

Further, in each of the battery modules 21 of the present embodiment, the battery chamber 27 is separated from the exhaust path 29 by the partition plate 25. With this structure, it is possible to prevent a high-temperature gas released from a cell 1 from flowing back to, or flowing into the battery chamber 27. This means that the normal cell 1 can be prevented from being exposed to the high-temperature gas, and as a result, the safety of the battery module 21 can be increased.

Here, the cross-sectional area of the exhaust path of the battery pack 51 will be described.

As the cross-sectional area of the exhaust path is reduced, it becomes less easy to release the exhaust gas, and this may result in pressure loss. If the pressure loss occurs, the exhaust gas may flow back. Further, the battery pack 51 or the battery module 21 may also be damaged. The damage may cause damage to the cells 1. For these reasons, it is preferable that the cross-sectional area of the exhaust path is large.

On the other hand, if the exhaust path has a large cross-sectional area, the ratio of the exhaust gas which collides with the inner surface of the exhaust path decreases. As a result, the exhaust gas is less easily cooled. Moreover, if the exhaust path has a large cross-sectional area, the battery module or the battery pack is increased in size, which results in a reduction in energy density of the battery pack.

It is preferable to decide the cross-sectional area of the exhaust path in view of the above matters. The inventors of the present application consider that the pressure loss is not caused and the exhaust gas can be cooled if the cross-sectional area of the exhaust path is 400 mm² or more and 500 mm² or less. That is, the cross-sectional area of each of the first exhaust path branches 31, the second exhaust path branch 33, and the connecting members 57 is preferably 400 mm² or more and 500 mm² or less.

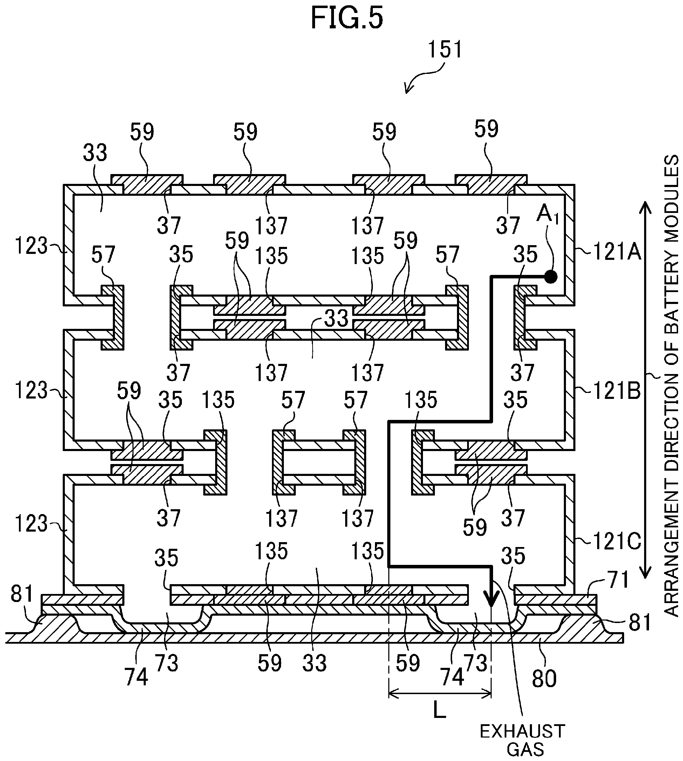

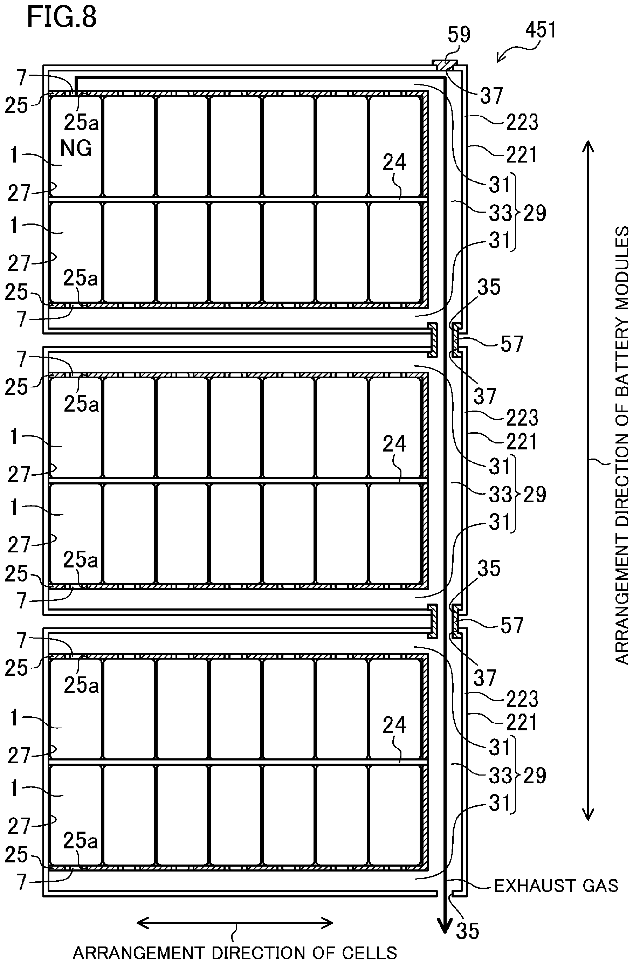

If the battery pack has a structure as shown, for example, in FIG. 5 to FIG. 7, the exhaust path of the battery pack can be further elongated. The same advantage can also be obtained if the battery module has a structure as shown in FIG. 8 to FIG. 9. The structures will be sequentially described.

FIG. 5 is a cross section of a battery pack 151 according to the first variation. The battery pack 51 and the battery pack 151 are different from each other in the structure of the exhaust path in the arrangement direction of the battery modules. Differences from the battery pack 51 will be mainly described below.

The battery pack 151 includes battery modules 121 (the reference character of the battery modules is "121" if locations of the battery modules in the battery pack 151 are not specified) in an arrangement. Not only first outlet openings 35, 35, but also second outlet openings 135, 135 are formed in a lower surface of a module case 123 of each of the battery modules 121. Similarly, not only first inlet openings 37, 37, but also second inlet openings 137, 137 are formed in an upper surface of each of the module cases 123. Each of the first inlet openings 37 is formed at a location opposite to the corresponding one of the first outlet openings 35. Each of the second inlet openings 137 is formed at a location opposite to the corresponding one of the second outlet openings 135.

In the battery pack 151, each first outlet opening 35 faces the first inlet opening 37 formed in the adjacent battery module 121. Each second outlet opening 135 faces the second inlet opening 137 formed in the adjacent battery module 121. As shown in FIG. 5, the uppermost battery module 121A and the middle battery module 121B communicate with each other by the first outlet openings 35 and the first inlet openings 37 connected through connecting members 57. The middle battery module 121B and the lowermost battery module 121C communicate with each other by the second outlet openings 135 and the second inlet openings 137 connected through the connecting members 57. The first outlet openings 35 of the lowermost battery module 121C communicate with exhaust ducts 73.

The second outlet openings 135, the first inlet openings 37, and the second inlet openings 137 of the uppermost battery module 121A, the first outlet openings 35 and the second inlet openings 137 of the middle battery module 121B, and the first inlet openings 37 and the second outlet openings 135 of the lowermost battery module 121C are preferably closed by caps 59. As a result, it is possible to control the flow path of the exhaust gas, and possible to prevent entrance of foreign substances.

When the uppermost battery module 121A is an abnormal battery module, the high-temperature gas released from a cell 1 is released to the point A₁, at which the flow direction is changed as shown in FIG. 2. After that, the high-temperature gas passes through the connecting member 57, and is released from the first outlet opening 35 of the uppermost battery module 121A to the first inlet opening 37 of the middle battery module 121B. The first outlet opening 35 of the middle battery module 121B is closed by the cap 59, whereas the second outlet opening 135 of the battery module 121B is open. Thus, the exhaust gas is released from the second outlet opening 135 of the middle battery module 121B to the second inlet opening 137 of the lowermost battery module 121C through the connecting member 57. The second outlet opening 135 of the lowermost battery module 121C is closed by the cap 59, whereas the first outlet opening 35 of the battery module 121C is open. Thus, the exhaust gas is released to the exhaust duct 73 through the first outlet opening 35 of the lowermost battery module 121C, and then to the outside of the battery pack 151.

Accordingly, the release path of the battery pack 151 is longer than the release path of the battery pack 51 by about "2L." Here, the length "L" is a distance between a center point of the first outlet opening 35 and a center point of the second outlet opening 135. With this structure, the temperature of the gas released from the battery pack 151 is lower than the temperature of the gas released from the battery pack 51. However, the total volume of the battery pack 51 and the total volume of the battery pack 151 are not much different. Accordingly, it is possible to improve safety with almost no reduction in energy density in the battery pack 151, compared to in the battery pack 51.

Each of the battery modules 121 may be provided with a third outlet opening, a fourth outlet opening, ... , and an nth outlet opening. The larger the number of n, the longer the release path of the battery pack 151 can be. However, if the number of n is large, the number of outlet openings and inlet openings to be closed is increased. This may cause a reduction in productivity of the battery pack, and further result in an increase in cost of the battery pack. Moreover, the strength of the module case may also be reduced. It is preferable to decide the number of n in view of these matters.

The length L is not specifically limited. The length L may be decided in view of productivity of the module cases, while ensuring the length of the exhaust path and the strength of the module case.

Further, the uppermost battery module 121A and the middle battery module 121B may communicate with each other by the second outlet openings 135 and the second inlet openings 137 connected through the connecting members 57, and the middle battery module 121B and the lowermost battery module 121C may communicate with each other by the first outlet openings 35 and the first inlet openings 37 connected through the connecting members 57.

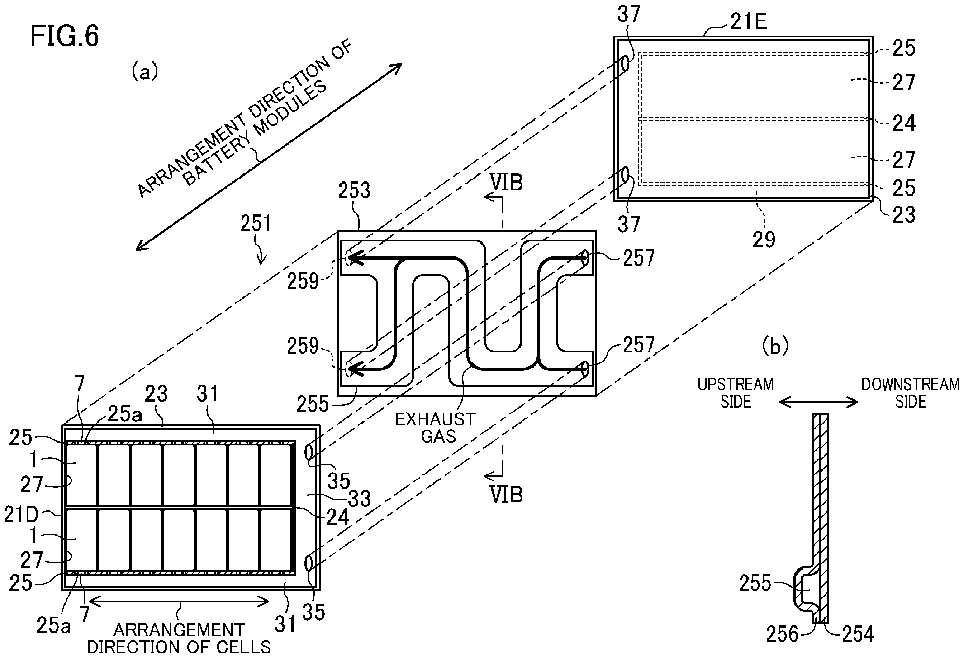

FIG. 6 is an exploded plan view of part of a battery pack 251 according to the second variation. FIG. 6(b) is a cross section taken along the line VIB-VIB of FIG. 6(a). In FIG. 6(a), an internal structure of a battery module 21D is shown in solid line, and part of an internal structure of a battery module 21E is shown in broken line. The battery pack 51 and the battery pack 251 are different from each other in the structure of a connecting member. Differences from the battery pack 51 will be mainly described below.

In the battery pack 251, a connecting member 253 includes two sheet members 254, 256 with a hollow space 255 therebetween, as shown in FIG. 6(b). The hollow space 255 has a curved shape in plan view. Two upstream side openings 257, 257 are formed at one end of the hollow space 255, and two downstream side openings 259, 259 are formed at the other end of the hollow space 255. Each of the upstream side openings 257 is formed in an upper surface of the connecting member 253, and communicates with the hollow space 255 and a corresponding one of the first outlet openings 35 of the battery module 21D (the upstream side battery module) located upstream of the connecting member 253. Each of the downstream side openings 259 is formed in a lower surface of the connecting member 253, and communicates with the hollow space 255 and a corresponding one of first inlet openings 37 of the battery module 21E (the downstream side battery module) located downstream of the connecting member 253. It is preferable that each of the upstream side openings 257 communicates with the first outlet opening 35 of the upstream side battery module 21D via a short-length communicating pipe (not shown), etc. The same holds true of the downstream side openings 259.

In such a battery pack 251, the gas released from the first outlet openings 35 of the upstream side battery module 21D is led to the upstream side openings 257, and flows along a longitudinal direction of the hollow space 255 to be released to the first inlet openings 37 of the downstream side battery module 21E through the downstream side openings 259. Here, the hollow space 255 has a curved shape in plan view as shown in FIG. 6(a). The upstream side openings 257 are located at one end of the hollow space 255 in the longitudinal direction. The downstream side openings 259 are located at the other end of the hollow space 255 in the longitudinal direction. Thus, the length of the exhaust path of the battery pack 251 is longer than the length of the battery pack 51 by the length of the hollow space 255 in the longitudinal direction. Accordingly, the temperature of the gas released from the battery pack 251 is lower than the temperature of the gas released from the battery pack 51.

It is preferable to use the connecting member 253 in order to elongate the exhaust path of the battery pack. However, if the connecting member 253 is used, separate members for connecting the connecting member 253 with the battery modules 21 are necessary. Thus, the productivity of the battery pack may be reduced, or the cost for the battery pack may be increased. Whether to use the connecting member 57 or the connecting member 253 may be decided in consideration of the safety of the battery pack and the productivity and cost of the battery pack.

For example, the connecting member 253 is preferably located downstream. With this structure, even if a high-temperature gas is released from a cell 1 included in the downstream side battery module 21, the temperature of the gas released from the battery pack 251 is 100°C or less.

Further, even-numbered connecting members 253 may be provided between adjacent battery modules 21, 21. With this structure, the first outlet openings 35 and the first inlet openings 37 can be provided at the same side in the battery pack 251. Accordingly, it is possible to separate the gas exhaust path from the electric system, such as lines, etc., in the battery pack 251, as well.

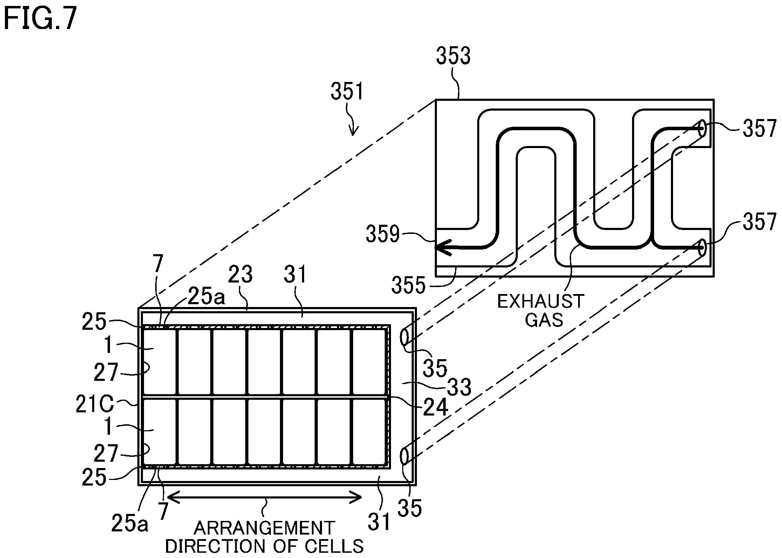

Further, the plan view of the hollow space 255 is not limited to the plan view shown in FIG. 6(a). For example, the hollow space 255 in plan view may have a straight shape, or may have a curved shape different from the curved shape shown in FIG. 6(a). If the hollow space 255 has a curved shape in plan view, the exhaust gas flows along the longitudinal direction of the hollow space 255, while colliding with an inner surface of the hollow space 255, and it is possible to elongate the hollow space 255 within a limited space. For these reasons, it is preferable that the hollow space 255 has a curved shape in plan view, and much preferable if the hollow space 255 is wound as shown in FIG. 6(a). The same holds true of a second hollow space 355 in FIG. 7 described later.

Further, the positions of the upstream side openings 257 and the downstream side openings 259 are not limited to the positions in FIG. 6(a). If the upstream side openings 257 and the downstream side openings 259 are located at different positions of the hollow space 255 in the longitudinal direction of the hollow space 255, the length of the exhaust path of the battery pack 251 can be longer than the exhaust path of the battery pack 51. However, if the upstream side openings 257 are provided at one end of the hollow space 255 in the longitudinal direction, and the downstream side openings 259 are provided at the other end of the hollow space 255 in the longitudinal direction, the length of the exhaust path of the battery pack 251 can be the longest. The same holds true of openings (first openings) 357 and a release end (a second opening) 359 in FIG. 7 described later.

Further, the structure of the connecting member 253 is not limited to the structure shown in FIG. 6(b). For example, the sheet member 256 may also have a projection and a depression, and the hollow space 255 may be formed by adhering this sheet member 256 to the sheet member 254 shown in FIG. 6(b). The same holds true of a lower panel (a panel) 353 in FIG. 7 described later.

Further, the materials for the sheet members 254, 256 are not specifically limited. For example, the sheet members 254, 256 may be made of a galvanized sheet iron, etc. It is preferable to use an electrolytic galvanized sheet (SECC) as the galvanized sheet iron.

FIG. 7 is an exploded plan view of part of a battery pack 351 according to the third variation. FIG. 7 shows an internal structure of a lowermost battery module 21C. The battery pack 351 according to the present variation further includes the lower panel 353. Differences from the battery pack 51 will be mainly described below.

The lower panel 353 is provided between the lowermost battery module 21C and a bottom surface of a holding member 53, and includes two sheet members (not shown) with the second hollow space 355 therebetween (see FIG. 6(b)). The second hollow space 355 has a curved shape in plan view. The two openings 357, 357 are formed at one end of the second hollow space 355, and the release end 359 is formed at the other end of the second hollow space 355. Each of the openings 357 is formed in an upper surface of the lower panel 353, and communicates with the second hollow space 355 and a corresponding one of the first outlet openings 35 of the lowermost battery module 21C. The release end 359 communicates with the second hollow space 355 and an outlet opening formed in a pack case.

In such a battery pack 351, the gas released from each of the first outlet openings 35 of the lowermost battery module 21C is led to the openings 357, and flows along a longitudinal direction of the second hollow space 355 to be released from the release end 359. Thus, the length of the exhaust path of the battery pack 351 is longer than the length of the battery pack 51 by the length of the second hollow space 355 in the longitudinal direction. Accordingly, the temperature of the gas released from the battery pack 351 is lower than the temperature of the gas released from the battery pack 51. For example, even if a high-temperature gas is released from a cell 1 included in the lowermost battery module 21C, the temperature of the gas released from the battery pack 351 can be lower than 100°C or less.

It is preferable to use the lower panel 353 in order to elongate the exhaust path of the battery pack, and preferable to provide a larger number of lower panels 353. However, if the lower panel 353 is used, a separate member for connecting the lower panel 353 and the lowermost battery module 21C is necessary. Thus, the productivity of the battery pack may be reduced, or the cost for the battery pack may be increased. Further, if the number of lower panels 353 is increased, it results in a reduction in energy density of the battery pack. Whether to provide the lower panel 353 or not, or the number of lower panels 353 may be decided in view of these matters.

FIG. 8 is a cross section of a battery pack 451 according to the fourth variation. In FIG. 8, the outside shape of each cell 1 is illustrated but a module mounting member 71 is not illustrated, for simplification of the drawing. Differences from the battery module 21 and the battery pack 51 will be mainly described below.

In each of battery modules 221, a first outlet opening 35 is formed in a front face of a module case 223. A first inlet opening 37 is formed in a back face of the module case 223. The battery pack 451 includes the battery modules 221 arranged in a direction to which the first outlet opening 35 is open.

In such a battery pack 451, the gas released from a cell 1 (the cell 1 labeled NG in FIG. 8) is released from a release portion 7a to a first exhaust path branch 31, and flows along the longitudinal direction of the first exhaust path branch 31 to collide with an inner side surface of the module case 223. The flowing direction of the exhaust gas is changed by this collision with the inner side surface of the module case 223. The exhaust gas flows along the longitudinal direction of a second exhaust path branch 33, and is released through the first outlet opening 35 to be led to the first inlet opening 37 formed in an adjacent battery module 221. Accordingly, approximately the same advantages as the advantages obtained in the battery pack 51 shown in FIG. 3, etc., can be obtained in the battery pack 451.

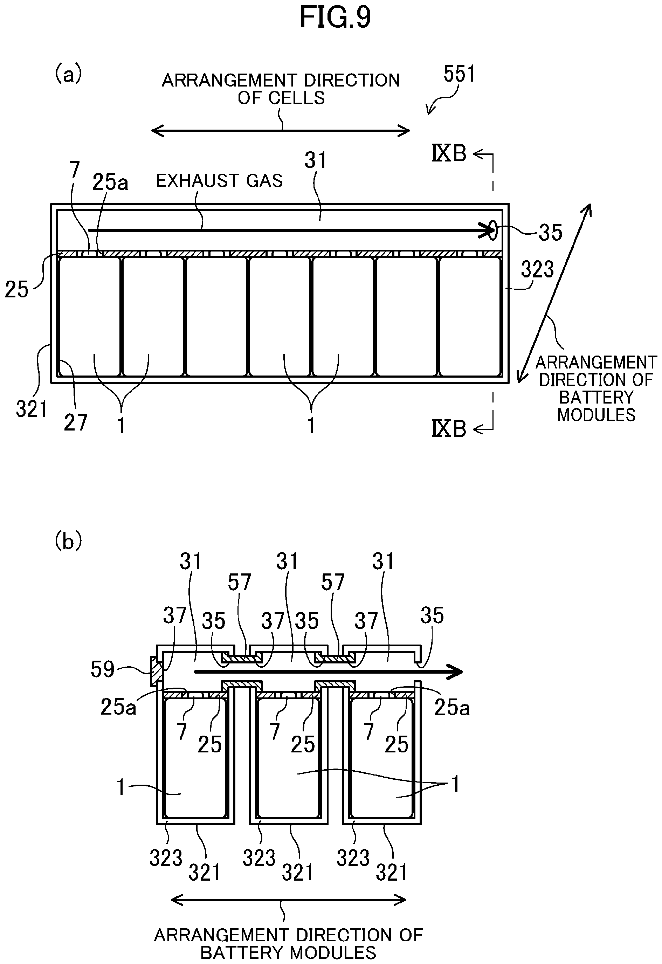

FIG. 9(a) and 9(b) show a plan view and a cross section of a battery pack 551 according to the fifth variation. FIG. 9(a) shows an internal structure of a battery module 321. In FIG. 9(b), the outside shape of each cell 1 is illustrated for simplification of the drawing. Differences from the battery module 21 and the battery pack 51 will be mainly described below.

A module case 323 of each battery module 321 is separated into one battery chamber 27 and a long-length exhaust path 29. A first outlet opening 35 is formed in an upper surface of the module case 323. A first inlet opening 37 is formed in a lower surface of the module case 323. The battery pack 551 includes the battery modules 321 arranged in a direction to which the first outlet opening 35 is open.

In such a battery pack 551, the gas released from a cell 1 is released from a release portion 7a to the exhaust path 29, and flows along a longitudinal direction of the exhaust path 29 to collide with an inner side surface of the module case 323. The flowing direction of the exhaust gas is changed by this collision, and the exhaust gas is released through the first outlet opening 35 to be led to the first inlet opening 37 formed in an adjacent battery module 321. Accordingly, approximately the same advantages as the advantages obtained in the battery pack 51 shown in FIG. 3, etc., can be obtained in the battery pack 551.

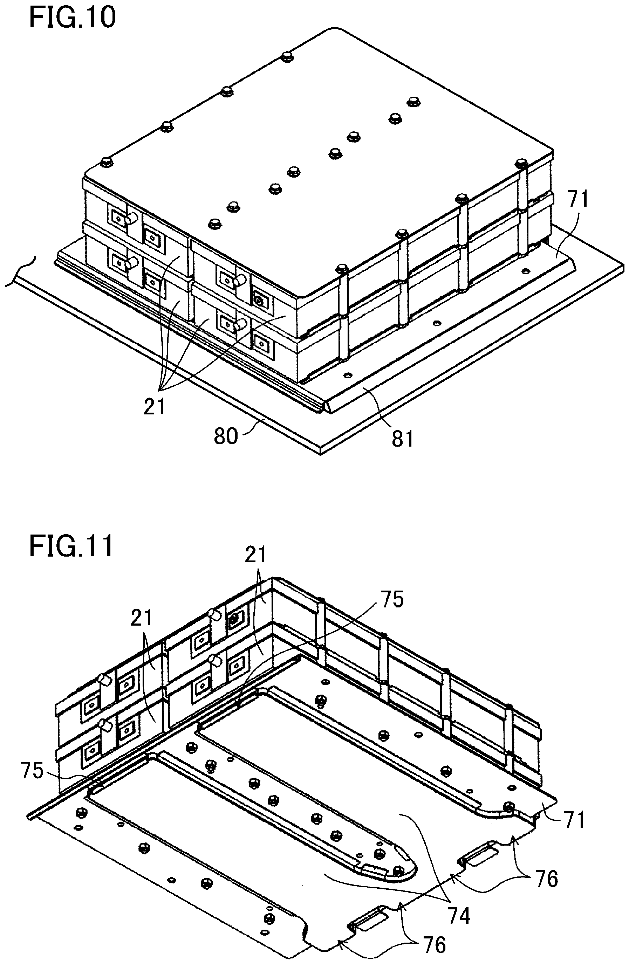

FIGS. 10 and 11 are perspective views illustrating an internal structure of a battery pack according to a sixth variation. In FIG. 11, a bottom surface portion 80 of the pack case of FIG. 10 is omitted, and a lower surface side of the pack case is illustrated.

Two columns of two-stage battery modules 21 are mounted on a module mounting member 71, and the module mounting member 71 is fixed to the bottom surface portion 80 of the pack case. The bottom surface portion 80 has raised portions 81 protruding upward, and the module mounting member 71 is mounted on and fixed to the raised portions 81.

As illustrated in FIG. 11, portions 76 of exhaust ducts corresponding to outlet openings of the battery modules 21 are located on the right in the figure, and the exhaust ducts indicated by the convex shape of duct lower members 74 extend from the portions 76 to duct exits 75 on the left. When the gas released from a cell enters the exhaust duct through the outlet opening of the battery module 21 and collides with the duct lower member 74, the flow direction of the gas is changed by 90°. Therefore, the temperature of the gas is significantly lowered at this timing. Moreover, the area of an opening of the exhaust duct perpendicular to the flowing direction of the gas is larger than the area of the outlet opening of the battery module 21, which also lowers the temperature of the gas. The exhaust duct is, as described above, in pressure contact with the bottom surface portion 80, and thus the heat of the gas is transferred via the exhaust duct to the pack case, thereby further cooling the gas.

The present embodiment may have the following structures.

The battery packs shown in FIG. 6 to FIG. 9 may have the exhaust path shown in FIG. 5. Further, each of the battery packs shown in FIG. 5 and FIG. 7 to FIG. 9 may have the connecting member 253 shown in FIG. 6, in place of the connecting member 57. Further, each of the battery packs shown in FIG. 5 to FIG. 6 and FIG. 8 to FIG. 9 may have the lower panel 353 shown in FIG. 7. In any of these cases, the exhaust path of the battery pack can be elongated. Thus, the safety of the battery pack is further increased.

In the relationship between the bottom surface portion of the pack case and the module mounting member, the module mounting member may have the raised portions. The exhaust duct may have a winding release path of the gas as the connecting member illustrated in FIGS. 6 and 7.

The first outlet opening may be open to the arrangement direction of the cells. However, if the first outlet opening is open perpendicularly to the arrangement direction of the cells, the frequency of collision of the exhaust gas with the inner side surface of the module case can be increased. As a result, it is possible to reduce the temperature of the gas released from an abnormal battery module to about 400°C.

The positions of the battery chamber and the exhaust path in the module case may be different from the positions of the battery chamber and the exhaust path shown in FIG. 2 and FIG. 9. In the cases where the positions of the battery chamber and the exhaust path in the module case is as shown in FIG. 2, it is possible to form not only the battery pack shown in FIG. 4, but also the battery pack shown in FIG. 8. Thus, it is possible to provide a variety of battery packs.

In the battery module shown in FIG. 2, the first outlet opening may be provided in the middle portion of the second exhaust path branch in the longitudinal direction. With this structure, the length of movement of the exhaust gas in the battery module is increased, and the temperature of the gas released from an abnormal battery module is further reduced. In this case, each module case may have two first outlet openings, or one first outlet opening.

The first outlet opening and the first inlet opening connected together by the connecting member may be provided at positions facing each other (the former structure), or may be provided at positions not facing each other (the latter structure). The former structure is preferable in view of easiness in fixing the connecting member, or a reduction in pressure loss in the connecting member. However, the latter structure may also be used if the misalignment is not more than manufacturing dispersion. The same holds true of the second outlet opening and the second inlet opening connected together by the connecting member.

Similarly, in the battery module, the first outlet opening may be provided at a position not facing the first inlet opening. It is preferable to provide the first outlet opening at a position facing the first inlet opening so that the gas from the first inlet opening can be released through the first outlet opening without much pressure loss. However, the first outlet opening may be provided at a location not facing the first inlet opening if the misalignment is not more than manufacturing dispersion. The same holds true of the second outlet opening.

The technique for fixing the connecting member to the circumferential edge of the first outlet opening, etc., is not specifically limited. If the connecting member is made of resin such as PBT, example methods for fixing the connecting member include caulking.

The shape of the first outlet opening is not limited to the shape shown in FIG. 3, etc. The number of the first outlet openings is not limited to the number described above. The same holds true of the first inlet opening, the second outlet opening, the second inlet opening, the upstream side opening, the downstream side opening, the opening, and the release end.

The structure of the pack case is not limited to the structure shown in FIG. 3. Further, the structure of the module case is not specifically limited, and may be formed to have approximately the same shape as the shape of the pack case in FIG. 3.

The pack case may be replaced by a structure formed by a hollow frame member. In this case, it is possible to further increase the length of the exhaust path of the battery pack without a reduction in energy density of the battery pack, by connecting an outlet opening of a downstream side battery module to the hollow space of the frame member.

The pack case may be made of resin, or is preferably made of a highly thermal-conductive material (e.g., a metallic material such as iron or copper). If the pack case is made of a highly thermal-conductive material, heat of the exhaust gas can be further dissipated to the pack case. The same holds true of the module case.

The separation plate is not necessarily be provided. However, it is said that if a high-temperature gas is released from a cell, the temperature of the cell is increased to about 300 to 600°C, and therefore, the provision of the separation plate, particularly the separation plate made of a highly thermal-conductive material, can prevent the abnormal heat of the cell from being transmitted to the cells in the other battery chamber. For the similar reason, it is preferable that the plurality of cells are held in a holder made of a highly thermal-conductive material (e.g., aluminum) and accommodated in the module case.

The number of battery modules included in the battery pack is not limited to the number illustrated in FIG. 3, etc. Further, the battery modules may be stacked to form the battery pack, or the battery modules are arranged horizontally to form the battery pack. Further, in the battery pack, the battery modules may be connected together in parallel, or may be connected together in series. The structure for electrically connecting the plurality of battery modules together is not specifically limited.

Similarly, the number of the cells included in the battery module is not limited to the number illustrated in FIG. 2, etc. Further, in the module case, the plurality of cells may be arranged in a single row, or may be two-dimensionally arranged. If the plurality of cells are arranged in a staggered manner, it is possible to prevent an increase in volume of the battery module due to the increase in the number of the cells. Further, in the module case, the plurality of cells may be connected together in series, or may be connected together in parallel. The structure for electrically connecting the plurality of cells together is not specifically limited. For example, the partition plate may also serve as a positive electrode bus bar, a negative electrode bus bar, or both positive and negative bus bars.

Each of the cell may be a rectangular battery.

The positive electrode plate and the negative electrode plate may be stacked with a separator interposed therebetween, and comprise an electrode group.

The positive electrode lead may be replaced with a positive electrode current collector plate. The negative electrode lead may be replaced with a negative electrode current collector plate. As a result, a current collector resistance in the cell is reduced.

The positive electrode plate and the negative electrode plate may have any structures known as the structures of a positive electrode plate and a negative electrode plate, respectively, of a secondary battery (e.g., a lithium ion secondary battery). Further, the battery case, the gasket, the sealing plate, the positive electrode lead, and the negative electrode lead may be made of any materials known as the materials for a battery case, a gasket, a sealing plate, a positive electrode lead, and a negative electrode lead, respectively, of a secondary battery.

The release portion may be formed at a portion of the sealing plate extending in an axial direction of the battery case. In this case, too, the battery module shown in FIG. 2, etc. can be formed, and the gas released from a cell can be released to the exhaust path.

### INDUSTRIAL APPLICABILITY

As explained above, the present invention is useful as power sources of vehicles, power sources of thermal storage, etc.

### DESCRIPTION OF REFERENCE CHARACTERS

- 1: Cell
- 21: Battery Module
- 23: Module Case
- 27: Battery Chamber
- 29: Exhaust Path
- 31: First Exhaust Path Branch
- 33: Second Exhaust Path Branch
- 35: First Outlet Opening (Outlet Opening)
- 37: First Inlet Opening (Inlet Opening)
- 51: Battery Pack
- 57: Through Connecting Member
- 71: Module Mounting Member
- 73: Exhaust Duct
- 80: Bottom Surface Portion of Pack Case
- 135: Second Outlet Opening
- 137: Second Inlet Opening
- 253: Connecting Member (Plate)
- 255: Hollow Portion
- 257: Upstream Side Opening
- 259: Downstream Side Opening
- 353: Lower Panel (Panel)
- 355: Second Hollow Portion
- 357: Opening (First Opening)
- 359: Release End (Second Opening)

## Claims

1. A battery pack comprising:
a pack case; and
a plurality of battery modules (21) arranged in the pack case, wherein
each of the battery modules includes a plurality of cells (1) arranged in a module case (23),
each of the battery modules is separated into a battery chamber (27) in which the plurality of cells (1) are accommodated and an exhaust path (29) through which an exhaust gas from at least one of the cells is released via an outlet opening (35) to an outside of the battery module,
one of the battery module is mounted on a module mounting member (71),
the module mounting member (71) is fixed to the pack case,
the module mounting member (71) is provided with an exhaust duct (73) through which the exhaust gas released from the exhaust path passes,
the module mounting member (71) is disposed between the one of the battery module and a bottom surface (80) of the pack case,
the outlet opening (35) is formed in a side surface of the module case,
the plurality of battery modules are arranged in a direction to which the outlet opening (35) is open,
a side surface of the module case opposite to the side surface of the module case in which the outlet opening (35) is formed is provided with an inlet opening (37) to which the exhaust gas released from the outlet opening of an adjacent battery module is introduced,
**characterized in that**
the outlet opening (35) is connected to the inlet opening (37) of the adjacent battery module through a hollow connecting member (57, 253),
a duct lower member (74) forming the exhaust duct (73) is in pressure contact with the bottom surface (80) of the pack case,
the module case (23) is separated into the battery chamber (27) and the exhaust path (29) by the partition plate (25),
the partition plate (25) includes a plurality of through holes (25a) each exhausting gas of the plurality of the cells accommodated in the battery chamber,
the exhaust path (29) includes first exhaust path branches (31) extending in the arrangement direction of the cells and allowing gas exhausted from the cells to flow, and a second exhaust path branch (33) extending in a direction perpendicular to the arrangement direction of the cells, communicating with the first exhaust path branches (31), and allowing the gas from the first exhaust path branches (31) to flow, and the outlet opening (35) connected with the exhaust path (29) of the downstream side battery module is formed at a longitudinal end of the second exhaust path branch (33).

2. The battery pack of claim 1, wherein a first battery module, a second battery module, and a third battery module are sequentially arranged, in each of the first battery module, the second battery module, and the third battery module, a second outlet opening (135) different from the outlet opening is formed in the side surface of the module case in which the outlet opening is formed, a second inlet opening (137) different from the inlet opening is formed in the side surface of the module case in which the inlet opening is formed, the inlet opening is opposite to the outlet opening, the second inlet opening is opposite to the second outlet opening, the outlet opening of the first battery module is connected to the inlet opening of the second battery module through the connecting member, and the second outlet opening of the second battery module is connected to the second inlet opening of the third battery module through the connecting member.

3. The battery pack of claim 2, wherein the second outlet opening (135) of the first battery module, the second inlet opening of the second battery module, and the outlet opening of the second battery module are closed.

4. The battery pack of any one of claims 1-3, wherein the connecting member (57, 253) is a pipe.

5. The battery pack of any one of claims 1-3, wherein
the connecting member (253) is a plate having a hollow space (255),
the hollow space (255) has a straight shape or a curved shape in plan view,
the hollow space (255) includes an upstream side opening (257) connected to the outlet opening (35) of one of the battery modules which is located upstream in a release direction of the exhaust gas from the connecting member, and a downstream side opening (259) connected to the inlet opening of one of the battery modules which is located downstream in the release direction of the exhaust gas from the connecting member, and
the upstream side opening (257) is positioned at one end of the hollow space (255) in the longitudinal direction and the downstream side opening (259) is positioned at an other end of the hollow space (255) in the longitudinal direction.

6. The battery pack of any one of claims 1-5, further comprising a panel (353) having a hollow space (355),
wherein the hollow space (355) of the panel (353) is connected to the outlet opening of a downstream side battery module located downstream in the release direction of the exhaust gas,
the hollow space of the panel has a straight shape or a curved shape in plan view,
the hollow space of the panel includes a first opening (357) connected to the outlet opening of the downstream side battery module, and a second opening from which the exhaust gas introduced to the first opening is released, and
the first opening is positioned at a location different from a location of the second opening in a longitudinal direction of the hollow space of the panel.

7. The battery pack of any one of claims 1-6, wherein the inlet opening of an uppermost battery module in the release direction of the exhaust gas is closed.

8. The battery pack of any one of claims 1-7, wherein the outlet opening is open in a direction perpendicular to a direction in which the cells are arranged.

9. The battery pack of any one of claims 1-8, wherein the battery modules are stacked.

## Patentansprüche

1. Batteriepack, der umfasst:
ein Pack-Gehäuse; sowie
eine Vielzahl von Batterie-Modulen (21), die in dem Pack-Gehäuse angeordnet sind, wobei
jedes der Batterie-Module eine Vielzahl von Zellen (1) enthält, die in einem Modul-Gehäuse (23) angeordnet sind,
jedes der Batterie-Module in eine Batterie-Kammer (27), in der die Vielzahl von Zellen (1) aufgenommen sind, und einen Abgas-Weg (29) getrennt ist, auf dem ein Abgas von wenigstens einer der Zellen über eine Auslass-Öffnung (35) zu einer Außenseite des Batterie-Moduls freigesetzt wird,
eines der Batterie-Module an einem Modul-Anbringungselement (71) angebracht ist,
das Modul-Anbringungselement (71) an dem Pack-Gehäuse befestigt ist,
das Modul-Anbringungselement (71) mit einer Abgas-Leitung (73) versehen ist, durch die das über den Abgas-Weg freigesetzte Abgas strömt,
das Modul-Anbringungselement (71) zwischen dem einen der Batterie-Module und einer Bodenfläche (80) des Pack-Gehäuses angeordnet ist,
die Auslass-Öffnung (35) in einer Seitenfläche des Modul-Gehäuses ausgebildet ist,
die Vielzahl von Batterie-Modulen in einer Richtung angeordnet sind, in der die Auslass-öffnung (35) offen ist,
eine Seitenfläche des Modul-Gehäuses, die der Seitenfläche des Modul-Gehäuses gegenüberliegt, in der die Auslass-Öffnung (35) ausgebildet ist, mit einer Einlass-Öffnung (37) versehen ist, in die das über die Auslass-Öffnung eines benachbarten Batterie-Moduls freigesetzte Abgas eingeleitet wird,
**dadurch gekennzeichnet, dass**
die Auslass-Öffnung (35) über ein hohles Verbindungselement (57, 253) mit der Einleit-Öffnung (37) des benachbarten Batterie-Moduls verbunden ist,
ein unteres Leitungselement (74), das in der Abgasleitung (73) ausgebildet ist, in Druckkontakt mit der Bodenfläche (80) des Pack-Gehäuses ist,
das Modul-Gehäuse (23) durch die Trennplatte (25) in die Batterie-Kammer (27) und den Abgas-Weg (29) getrennt wird,
die Trennplatte (25) eine Vielzahl von Durchgangslöchern (25a) enthält, die jeweils Gas der Vielzahl der in der Batterie-Kammer aufgenommenen Zellen ableiten,
der Abgas-Weg (29) erste Abzweigungen (31) des Abgas-Weges, die in der Anordnungs-Richtung der Zellen verlaufen und aus den Zellen abgeleitetes Gas strömen lassen, sowie eine zweite Abzweigung (33) des Abgas-Weges enthält, die in einer Richtung senkrecht zu der Anordnungs-Richtung der Zellen verläuft, mit den ersten Abzweigungen (31) des Abgas-Weges in Verbindung steht und das Gas aus den ersten Abzweigungen (31) des Abgas-Weges strömen lässt, und
die Auslass-Öffnung (35), die mit dem Abgas-Weg (29) des Batterie-Moduls der stromab liegenden Seite verbunden ist, an einem Ende der zweiten Abzweigung (33) des Abgas-Weges in Längsrichtung ausgebildet ist.

2. Batteriepack nach Anspruch 1, wobei
ein erstes Batterie-Modul, ein zweites Batterie-Modul und ein drittes Batterie-Modul aufeinanderfolgend angeordnet sind,
in dem ersten Batterie-Modul, dem zweiten Batterie-Modul und dem dritten Batterie-Modul jeweils eine zweite Auslass-Öffnung (135), die sich von der Auslass-Öffnung unterscheidet, in der Seitenfläche des Modul-Gehäuses ausgebildet ist, in der die Auslass-Öffnung ausgebildet ist,
eine zweite Einlass-Öffnung (137), die sich von der Einlass-Öffnung unterscheidet, in der Seitenfläche des Modul-Gehäuses ausgebildet ist, in der die Einlass-Öffnung ausgebildet ist,
die Einlass-Öffnung der Auslass-Öffnung gegenüberliegt,
die zweite Einlass-Öffnung der zweiten Auslass-Öffnung gegenüberliegt,
die Auslass-Öffnung des ersten Batterie-Moduls über das Verbindungselement mit der Einlass-Öffnung des zweiten Batterie-Moduls verbunden ist, und
die zweite Auslass-Öffnung des zweiten Batterie-Moduls über das Verbindungselement mit der zweiten Einlass-Öffnung des dritten Batterie-Moduls verbunden ist.

3. Batteriepack nach Anspruch 2, wobei die zweite Auslass-Öffnung (135) des ersten Batterie-Moduls, die zweite Einlass-Öffnung des zweiten Batterie-Moduls und die Auslass-Öffnung des zweiten Batterie-Moduls geschlossen sind.

4. Batteriepack nach einem der Ansprüche 1-3, wobei das Verbindungselement (57, 253) ein Rohr ist.

5. Batteriepack nach einem der Ansprüche 1-3, wobei
das Verbindungselement (253) eine Platte mit einem Hohlraum (255) ist,
der Hohlraum (255) in Draufsicht eine gerade Form oder eine gekrümmte Form hat,
der Hohlraum (255) eine Öffnung (257) der stromauf liegenden Seite, die mit der Auslass-Öffnung (35) eines der Batterie-Module verbunden ist, das in einer Freisetzungs-Richtung des Abgases von dem Verbindungselement stromauf angeordnet ist, sowie eine Öffnung (259) der stromab liegenden Seite enthält, die mit der Einlass-Öffnung eines der Batterie-Module verbunden ist, das in der Freisetzungs-Richtung des Abgases von dem Verbindungselement stromab angeordnet ist, und
die Öffnung (257) der stromauf liegenden Seite an einem Ende des Hohlraums (255) in der Längsrichtung positioniert ist und die Öffnung (259) der stromab liegenden Seite an einem anderen Ende des Hohlraums (255) in der Längsrichtung positioniert ist.

6. Batteriepack nach einem der Ansprüche 1-5, der des Weiteren eine Verkleidung (353) mit einem Hohlraum (355) umfasst,
wobei der Hohlraum (355 der Verkleidung (353) mit der Auslass-Öffnung eines Batterie-Moduls der stromab liegenden Seite verbunden ist, das in der Freisetzungs-Richtung des Abgases stromab angeordnet ist,
der Hohlraum der Verkleidung in Draufsicht eine gerade Form oder eine gekrümmte Form hat,
der Hohlraum der Verkleidung eine erste Öffnung (357), die mit der Auslass-Öffnung des Batterie-Moduls der stromab liegenden Seite verbunden ist, sowie eine zweite Öffnung enthält, über die das in die erste Öffnung eingeleitete Abgas freigesetzt wird, und
die erste Öffnung sich an einer anderen Position als der Position der zweiten Öffnung in einer Längsrichtung des Hohlraums der Verkleidung befindet.

7. Batteriepack nach einem der Ansprüche 1-6, wobei die Einlass-Öffnung eines obersten Batterie-Moduls in der Freisetzungs-Richtung des Abgases geschlossen ist.

8. Batteriepack nach einem der Ansprüche 1-7, wobei die Auslass-Öffnung in einer Richtung offen ist, die senkrecht zu einer Richtung ist, in der die Zellen angeordnet sind.

9. Batteriepack nach einem der Ansprüche 1-8, wobei die Batterie-Module geschichtet sind.

## Revendications

1. Bloc-batterie comprenant :
un carter d'emballage ; et
une pluralité de modules de batterie (21) disposés dans le carter d'emballage, dans lequel
chacun des modules de batterie comprend une pluralité de cellules (1) agencées dans un carter de module (23),
chacun des modules de batterie est séparé dans une chambre de batterie (27) dans laquelle sont logées la pluralité de cellules (1) et un trajet d'échappement (29) à travers lequel des gaz d'échappement d'au moins une des cellules sont libérés via une ouverture de sortie (35) à l'extérieur du module de batterie,
un premier module de batterie est monté sur un élément de montage de module (71),
l'élément de montage de module (71) est fixé au carter d'emballage,
l'élément de montage de module (71) est muni d'un conduit d'échappement (73) à travers lequel passent les gaz d'échappement libérés depuis le trajet d'échappement,
l'élément de montage de module (71) est disposé entre le premier module de batterie et une surface inférieure (80) du carter d'emballage,
l'ouverture de sortie (35) est formée dans une surface latérale du carter de module,
la pluralité de modules de batterie sont disposés dans une direction vers laquelle l'ouverture de sortie (35) est ouverte,
une surface latérale du carter de module opposée à la surface latérale du carter de module dans laquelle l'ouverture de sortie (35) est formée est munie d'une ouverture d'entrée (37) dans laquelle les gaz d'échappement libérés depuis l'ouverture de sortie d'un module de batterie adjacent sont introduits,
**caractérisé en ce que**
l'ouverture de sortie (35) est connectée à l'ouverture d'entrée (37) du module de batterie adjacent via un élément de connexion creux (57, 253),
un élément inférieur de conduit (74) formant le conduit d'échappement (73) est en contact sous pression avec la surface inférieure (80) du carter d'emballage,
le carter de module (23) est séparé dans la chambre de batterie (27) et le trajet d'échappement (29) par la plaque de séparation (25),
la plaque de séparation (25) comprend une pluralité de trous traversants (25a),
chacun évacuant des gaz de la pluralité de cellules logées dans la chambre de batterie,
le trajet d'échappement (29) comprend des premières branches de trajet d'échappement (31) s'étendant dans la direction d'agencement des cellules et permettant à des gaz évacués des cellules de s'écouler, et
une seconde branche de trajet d'échappement (33) s'étendant dans une direction perpendiculaire à la direction d'agencement des cellules, communiquant avec les premières branches de trajet d'échappement (31), et permettant aux gaz provenant des premières branches de trajet d'échappement (31) de s'écouler, et l'ouverture de sortie (35) connectée au trajet d'échappement (29) du module de batterie côté aval est formée à une extrémité longitudinale de la seconde branche de trajet d'échappement (33).

2. Bloc-batterie selon la revendication 1, dans lequel
un premier module de batterie, un deuxième module de batterie et un troisième module de batterie sont agencés de manière séquentielle,
dans chacun des premier module de batterie, deuxième module de batterie et troisième module de batterie, une seconde ouverture de sortie (135) différente de l'ouverture de sortie est formée dans la surface latérale du carter de module dans lequel l'ouverture de sortie est formée,
une seconde ouverture d'entrée (137) différente de l'ouverture d'entrée est formée dans la surface latérale du carter de module dans laquelle l'ouverture d'entrée est formée,
l'ouverture d'entrée est opposée à l'ouverture de sortie,
la seconde ouverture d'entrée est opposée à la seconde ouverture de sortie, l'ouverture de sortie du premier module de batterie est connectée à l'ouverture d'entrée du deuxième module de batterie par l'intermédiaire de l'élément de connexion, et
la seconde ouverture de sortie du deuxième module de batterie est connectée à la seconde ouverture d'entrée du troisième module de batterie par l'intermédiaire de l'élément de connexion.

3. Bloc-batterie selon la revendication 2, dans lequel la seconde ouverture de sortie (135) du premier module de batterie, la seconde ouverture d'entrée du deuxième module de batterie, et l'ouverture de sortie du deuxième module de batterie sont fermées.

4. Bloc-batterie selon l'une quelconque des revendications 1 à 3, dans lequel l'élément de connexion (57, 253) est un tuyau.

5. Bloc-batterie selon l'une quelconque des revendications 1 à 3, dans lequel l'élément de connexion (253) est une plaque comportant un espace creux (255), l'espace creux (255) a une forme droite ou une forme incurvée sur une vue en plan, l'espace creux (255) comprend une ouverture latérale amont (257) connectée à l'ouverture de sortie (35) de l'un des modules de batterie qui est située en amont dans une direction de libération des gaz d'échappement depuis l'élément de connexion, et une ouverture latérale aval (259) connecté à l'ouverture d'entrée de l'un des modules de batterie qui est située en aval dans la direction de libération des gaz d'échappement depuis l'élément de connexion, et
l'ouverture latérale amont (257) est positionnée à une extrémité de l'espace creux (255) dans la direction longitudinale et l'ouverture latérale aval (259) est positionnée à une autre extrémité de l'espace creux (255) dans la direction longitudinale.

6. Bloc-batterie selon l'une quelconque des revendications 1 à 5, comprenant en outre un panneau (353) ayant un espace creux (355),
dans lequel l'espace creux (355) du panneau (353) est connecté à l'ouverture de sortie d'un module de batterie côté aval situé en aval dans la direction de libération des gaz d'échappement,
l'espace creux du panneau a une forme droite ou une forme incurvée sur une vue en plan,
l'espace creux du panneau comprend une première ouverture (357) reliée à l'ouverture de sortie du module de batterie côté aval, et une seconde ouverture à partir de laquelle les gaz d'échappement introduits dans la première ouverture sont libérés, et
la première ouverture est positionnée à un emplacement différent d'un emplacement de la seconde ouverture dans une direction longitudinale de l'espace creux du panneau.

7. Bloc-batterie selon l'une quelconque des revendications 1 à 6, dans lequel l'ouverture d'entrée d'un module de batterie le plus haut dans la direction de libération des gaz d'échappement est fermée.

8. Bloc-batterie selon l'une quelconque des revendications 1 à 7, dans lequel l'ouverture de sortie est ouverte dans une direction perpendiculaire à une direction dans laquelle les cellules sont agencées.

9. Bloc-batterie selon l'une quelconque des revendications 1 à 8, dans lequel les modules de batterie sont empilés.
